# EUROPEAN PATENT APPLICATION

(11) **EP 4 693 274 A1**
(43) Date of publication of application: **11.02.2026**
(21) Application number: 23930965.1
(22) Date of filing: 27.12.2023
(51) Int. Cl.: G10H 1/00, G06F 3/01, G06F 3/04815

(54) **INFORMATION PROCESSING DEVICE, INFORMATION PROCESSING METHOD, AND PROGRAM**

(30) Priority: 29.03.2023 JP 2023053261
(71) Applicant: Sony Group Corporation, Tokyo 108-0075 (JP); Sony Interactive Entertainment Inc., Tokyo 108-0075 (JP)
(72) Inventor: SHIMIZU, Takayoshi, Tokyo 108-0075 (JP); NOMOTO, Kazumasa, Tokyo 108-0075 (JP); YUTAKA, Teiji, Tokyo 108-0075 (JP)
(74) Representative: D Young & Co LLP
(86) International application number: PCT/JP2023/046914
(87) International publication number: WO 2024/202351

(57) **Abstract**

An information processing device according to the present technology includes: an operation estimation unit that estimates a performance operation speed for each of a plurality of performers whose avatars are arranged in common virtual space based on pieces of motion capture data on the performers; and an output sound control unit that selects performance sound data in accordance with the performance operation speed estimated by the operation estimation unit among pieces of performance sound data prepared for each of performance operation speeds for each of the performers, and performs control to output selected pieces of performance sound data for each of the performers in synchronization with each other.

## Description

### Field

The present technology relates to an information processing device, an information processing method, and a program, and particularly relates to technology related to sound control in a virtual music live show.

### Background

In recent years, various virtual events have been held with the development of virtual reality (VR) technology. Representative examples thereof include an event such as a music live show in VR space.

Note that Patent Literature 1 below can be cited as related conventional technology. Patent Literature 1 below discloses technology for achieving interaction between a performer and a user in an event such as a concert in virtual space.

### Citation List

### Patent Literature

Patent Literature 1: WO 2022/190917 A

### Summary

### Technical Problem

Here, it is conceivable that, in order to enhance a live feeling of a music live show in VR space, a live performance sound of each of performers is collected with a microphone and distributed to a terminal of each of the performers and terminals of a member of an audience.

If an approach of distributing performance sounds of the performers as they are as described above is adopted, however, the performance sounds of the performers cannot be synchronized with each other due to an influence of communication delay or the like, which impairs a feeling of unity of a performance. Specifically, each performer has a feeling of strangeness caused by non-synchronous sounds between the performers. Furthermore, the audience has a feeling of strangeness since the audience cannot listen to synchronized performance sounds.

The present technology has been made in view of the above-described circumstances, and an object thereof is to achieve a feeling of unity of a performance while preventing a live feeling from being impaired in a virtual music live show.

### Solution to Problem

An information processing device according to the present technology includes: an operation estimation unit that estimates a performance operation speed for each of a plurality of performers whose avatars are arranged in common virtual space based on pieces of motion capture data on the performers; and an output sound control unit that selects performance sound data in accordance with the performance operation speed estimated by the operation estimation unit among pieces of performance sound data prepared for each of performance operation speeds for each of the performers, and performs control to output selected pieces of performance sound data for each of the performers in synchronization with each other.

According to the configuration, pieces of performance sound data prepared for the respective performers are output in synchronization with each other instead of making a performance sound of each performer flow as it is as before. This achieves a feeling of unity of the performance. Furthermore, as in the above-described configuration, a performance operation speed is estimated for each performer, and the performance sound data is selected in accordance with the performance operation speed. When a performer gives an arranged performance having a higher performance operation speed than that of a normal performance, the corresponding performance sound data can be output, and a live feeling can be improved.

### Brief Description of Drawings

FIG. 1 is an explanatory diagram of an example of virtual space assumed in an embodiment.
FIG. 2 illustrates an outline of an approach of output sound control in the embodiment.
FIG. 3 illustrates a schematic configuration example of a VR system in the embodiment.
FIG. 4 is a block diagram illustrating a hardware configuration example of each of computer devices serving as performer terminals and audience terminals in the embodiment.
FIG. 5 is an explanatory diagram of data exchanged between the performer terminals and the audience terminals and a server device 3 in the VR system of the embodiment.
FIG. 6 is an explanatory diagram illustrating that the server device transmits a sound data set and VR space data to the performer terminals and the audience terminals.
FIG. 7 is an explanatory diagram of functions of the performer terminals and the audience terminals for achieving an output sound control approach in the embodiment.
FIG. 8 is an explanatory diagram of a virtual determination surface in the embodiment.
FIG. 9 is a flowchart illustrating an example of a specific processing procedure for achieving the output sound control in the embodiment.
Similarly to FIG. 9, FIG. 10 is a flowchart illustrating the example of a specific processing procedure for achieving the output sound control in the embodiment.
FIG. 11 is an explanatory diagram of an example of a staging effect.
FIG. 12 illustrates various functions of performer terminals and audience terminals in a second embodiment.
FIG. 13 is an explanatory diagram illustrating an example in which the number of visual effect components is changed in accordance with the magnitude of an elation degree.
FIG. 14 is a flowchart illustrating an example of a processing procedure to be executed for achieving the function of an effect adding unit in the second embodiment.
FIG. 15 is an explanatory diagram of an example of estimating an elation degree based on sensing data from a different sensor unit.
FIG. 16 is an explanatory diagram of an example of a staging effect through penlights.
FIG. 17 is an explanatory diagram of an example in which a server device performs processing of estimating a performance operation speed and processing of output sound control in the embodiment.

### Description of Embodiments

Embodiments according to the present technology will be described below in the following order with reference to the accompanying drawings.
<1. First Embodiment>
   [1-1. Example of Assumed Virtual Space and Outline of Approach]
   [1-2. System Configuration Example]
   [1-3. Functional Configuration Example]
   [1-4. Processing Procedure]
<2. Second Embodiment>
<3. Variations>
<4. Program>
<5. Summary of Embodiments>
<6. Present Technology>

### <1. First Embodiment>

### [1-1. Example of Assumed Virtual Space and Outline of Approach]

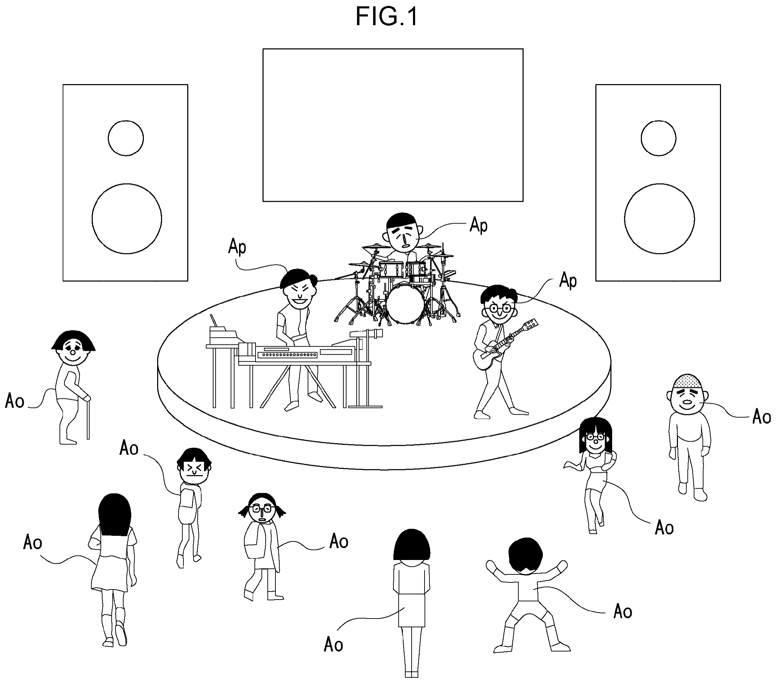

FIG. 1 is an explanatory diagram of an example of virtual space assumed in an embodiment.

In the embodiment, an event of a virtual music live show is illustrated as an example of a virtual event using virtual reality (VR) technology.

In the event of the virtual music live show, as illustrated, performer avatars Ap and audience avatars Ao are arranged in VR space simulating a live venue. The performer avatars Ap are avatars of people who play instruments. The audience avatars Ao are avatars of people who are members of an audience of the event. The VR space here is assumed to be, for example, metaverse space.

In the VR space, virtual objects (virtual instruments) simulating instruments to be played are arranged for the performer avatars Ap. Here, an example is illustrated in which three performers of a keyboard (or piano) performer, a drum performer, and a guitar (or bass) performer participate in the event of the virtual music live show and the performer avatars Ap corresponding to the keyboard performer, the drum performer, and the guitar performer are also arranged as the performer avatars Ap accordingly. Furthermore, in the VR space, virtual objects indicating the instruments used by the performers are also arranged.

In the example, both the performer avatars Ap and the audience avatars Ao reflect the motions of the bodies of original people in the VR space. Specifically, the motions of three-dimensional models of the performer avatars Ap and the audience avatars Ao are controlled so that the motions of the bodies of the original people, who are the performers and the members of the audience, are reflected as the motions of the bodies of the performer avatars Ap and the audience avatars Ao in the VR space based on motion capture data obtained by a motion capture unit that detects the motions of the bodies of the original people.

In the event of the virtual music live show in the example, a visualized image of the VR space, in which the avatars of people participating in the event are arranged as described above, is displayed on a terminal of each of participants. This can give each participant a feeling of actually participating in the event.

Furthermore, in the VR space in this case, it is conceivable that, for example, a voice message from a person who is a performer to the audience is transmitted, the cheers of the audience are transmitted to the performers, and a conversation between participants is made possible by collecting voice issued by a participant with a microphone and outputting the voice from a terminal of another participant.

Here, as described above, it is conceivable that, in order to enhance a live feeling of the virtual music live show in the VR space, a live performance sound of each performer is collected with a microphone and distributed to terminals of the performers and terminals of the members of the audience.

If an approach of distributing performance sounds of the performers as they are as described above is adopted, however, the performance sounds of the performers cannot be synchronized with each other due to an influence of communication delay or the like, which impairs a feeling of unity of a performance.

Therefore, in the embodiment, output sound control is performed as described above in order to achieve the feeling of unity of the performance while preventing a live feeling from being impaired in the virtual music live show.

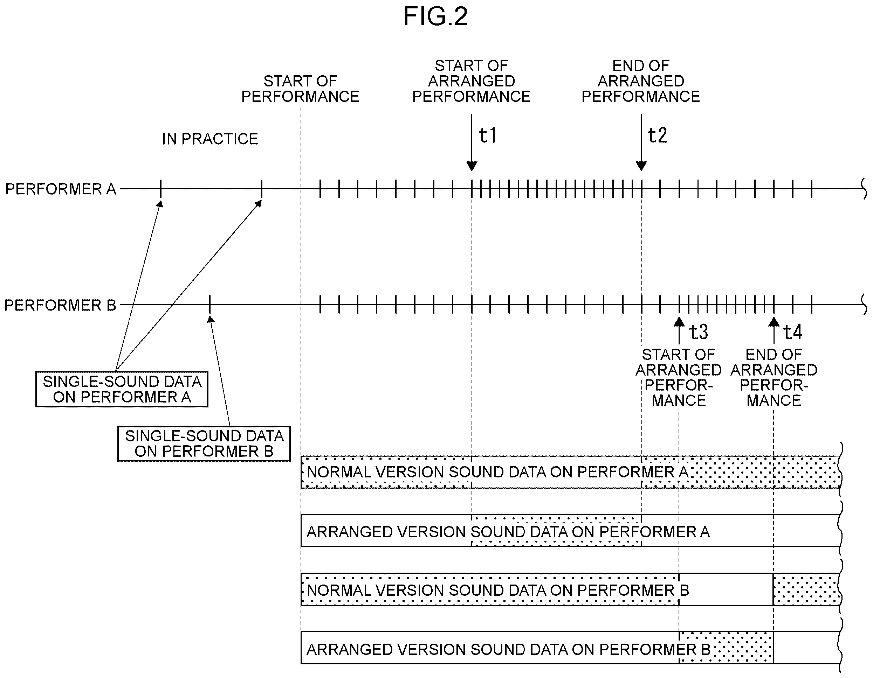

FIG. 2 illustrates an outline of an approach of the output sound control in the embodiment.

Here, although an example, in which only two performers of performers A and B participate, is illustrated, this is merely an example for description.

First, in the embodiment, performance sound data is prepared for each performer in holding a virtual music live show. In the example, it is assumed that a musical piece to be performed in the virtual music live show is preliminarily determined. Sound data obtained by prerecording a performance sound of each corresponding performer is prepared for such a musical piece scheduled to be performed as the performance sound data. For example, for a certain musical piece scheduled to be performed, when the performer A plays a keyboard and the performer B plays a drum, recorded sound data on a performance sound of a keyboard part of the musical piece is prepared as performance sound data on the performer A, and recorded sound data on a performance sound of a drum part of the musical piece is prepared as performance sound data on the performer B.

Moreover, in the embodiment, for the above-described performance sound data, both normal version sound data and arranged version sound data are prepared for each performer.

Here, the normal version sound data relates to a performance sound in a case where a performance is given in a performance mode serving as a reference to the arranged version sound data. For example, in a case of a musical piece having a musical score, it is conceivable that data on a performance sound in a case where a performance is given in accordance with the musical score is used.

The arranged version sound data is obtained by recording a performance arranged from a performance in which normal version sound data is the target of recording. In many cases, a performance is arranged in a mode in which the number of sounds is increased as compared to that in a performance of a normal version although depending on the genre of the musical piece.

An arranged performance is usually given within a period before or during the chorus of a musical piece.

For confirmation, the normal version sound data and the arranged version sound data have the same reproduction time length (time length from beginning to end of musical piece) as long as the normal version sound data and the arranged version sound data relate to the same musical piece. That is, the normal version sound data and the arranged version sound data have the same tempo of the musical piece as long as the normal version sound data and the arranged version sound data relate to the same musical piece.

In the embodiment, an approach is adopted in which the normal version sound data and the arranged version sound data prepared as described above are separately output in accordance with a performance operation speed of a performer in response to the start of a performance of a musical piece.

The performance operation speed here means the frequency of a performance operation. For example, in a case of keyboard instruments such as a keyboard and a piano, the performance operation speed refers to the frequency of a performance operation of pressing a keyboard. In a case of stringed instruments such as a guitar and a bass, the performance operation speed refers to the frequency of a performance operation of plucking a string. Furthermore, in a case of a percussion instrument such as a drum, the performance operation speed refers to the frequency of a performance operation of hitting a percussive surface.

In the example, the performance operation speed referring to such a frequency of a performance operation is estimated based on motion capture data on each performer.

As described above, an arranged performance is performed in a mode in which the number of sounds is increased in many cases, so that the start/end of the arranged performance can be determined by estimating the performance operation speed as described above.

Therefore, in the embodiment, an approach is adopted in which sound data in accordance with a performance operation speed is selected from the normal version sound data and the arranged version sound data as described above for each performer in response to the start of a performance of a musical piece and the selected pieces of sound data for respective performers are output in synchronization with each other.

A specific approach will be described.

FIG. 2 schematically illustrates performance operation speeds of the performers A and B by using the density of vertical lines.

Here, both the performers A and B give no arranged performances for a while from the time of the start of the performance (in figure, until time t1). In this case, in response to the start of the performance, the normal version sound data on the performer A is output from a reproduction position of the beginning of the musical piece for the performer A, and the normal version sound data on the performer A is output from a reproduction position of the beginning of the musical piece for the performer B.

In an example, the figure schematically illustrates that the performer A starts an arranged performance at the time t1 and the performance operation speed is raised accordingly. In this case, as illustrated, for the performer A, the state in which the normal version sound data on the performer A is output is switched to a state in which the arranged version sound data on the performer A is output. In the case, the output of the arranged version sound data is started from sound data at the reproduction position corresponding to the time t1. This causes the performer to synchronize with the other performer (here, performer B).

Furthermore, in the example in the figure, the arranged performance of the performer A ends at time t2 after the time t1. For the performer A, the state in which the arranged version sound data on the performer A is output is accordingly switched to a state in which the normal version sound data on the performer A is output. In the case, the output of the normal version sound data is started from sound data at a reproduction position corresponding to the time t2, which synchronizes the performer with the other performer.

Furthermore, the figure illustrates an example in which the performer B gives an arranged performance from time t3 to time t4 after the time t2. In this case, for sound data on the performer B, the state in which the normal version sound data on the performer B is output is switched to a state in which the arranged version sound data on the performer A is output at the time t3, and the state in which the arranged version sound data on the performer B is output is switched to a state in which the normal version sound data on the performer A is output at the time t4. Also in this case, in order to synchronize a performance sound with that of the other performer, the output of the arranged version sound data at the time t3 is started from a reproduction position corresponding to the time t3, and the output of the normal version sound data at the time t4 is started from a reproduction position corresponding to the time t4.

As described above, in the embodiment, pieces of performance sound data prepared for the respective performers are output in synchronization with each other instead of making a performance sound of each performer flow as it is as before. This achieves a feeling of unity of the performance. Furthermore, in the embodiment, a performance operation speed is estimated for each performer. Performance sound data in accordance with the performance operation speed is selectively output. This enables the output of corresponding performance sound data in a case where a performer gives an arranged performance at a performance operation speed higher than that of a normal performance, and can improve a live feeling.

In the embodiment, the above-described normal version sound data can be said as being prepared for being output in a case of a performance operation speed of a performer less than a predetermined speed threshold. The arranged version sound data can be said as being prepared for being output in a case of the performance operation speed of the performer equal to or more than the predetermined speed threshold.

From this point, the normal version sound data and the arranged version sound data described above can be expressed as "performance sound data prepared for each performance operation speed".

Here, in the embodiment, output sound control based on short-sound data prepared separately from the normal version sound data and the arranged version sound data is performed together with selective output control on the normal version sound data and the arranged version sound data as described above.

The figure illustrates a state before the start of the performance as a state of "in practice". During the period of practice, each performer may output a short performance sound such as a sporadic sound on a trial basis for adjusting an instrument before the start of the performance, for example.

In the embodiment, an approach is adopted in which no live performance sound of a performer is output even in a case of a low performance operation speed of the performer during such a period of practice and control is performed to output short-sound data in synchronization with the timing of the performance operation described above.

This can prevent the motion of an avatar of a performer from not synchronizing with a performance sound in a case where a performance operation is sporadically performed.

### [1-2. System Configuration Example]

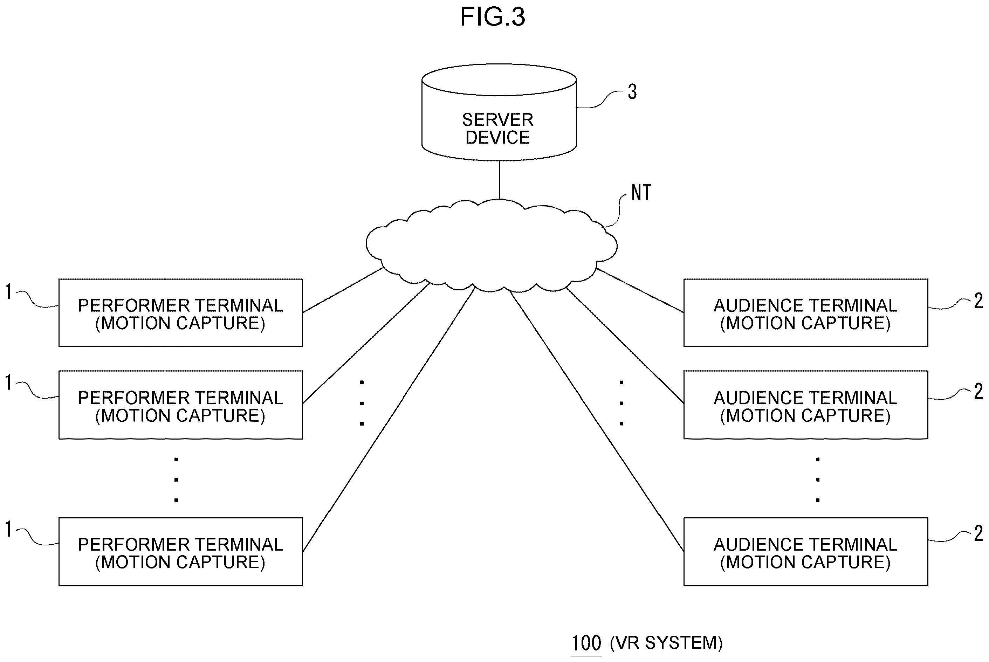

FIG. 3 illustrates a schematic configuration example of a VR system 100 in the embodiment.

The VR system 100 in the embodiment is used for displaying the visualized image of the VR space in FIG. 1 to each participant and causing each participant to listen to a sound obtained under the output sound control in the embodiment described above.

As illustrated, the VR system 100 includes a plurality of performer terminals 1, at least one or more audience terminals 2, and a server device 3. FIG. 3 illustrates a case where a plurality of audience terminals 2 is provided.

The performer terminals 1 are computer devices used by people who are performers participating in a virtual music live show. The audience terminals 2 are computer devices used by people who are members of an audience participating in the virtual music live show. Examples of the device forms of the performer terminals 1 and the audience terminals 2 can include a personal computer, a smartphone, and a tablet terminal.

As understood from the above description, the performer terminals 1 and the audience terminals 2 have motion capture functions for the performers and the members of the audience, respectively.

Furthermore, the server device 3 is configured as a computer device, and can perform data communication with the performer terminals 1 and the audience terminals 2 via a network NT, which is a communication network such as the Internet and a local area network (LAN) .

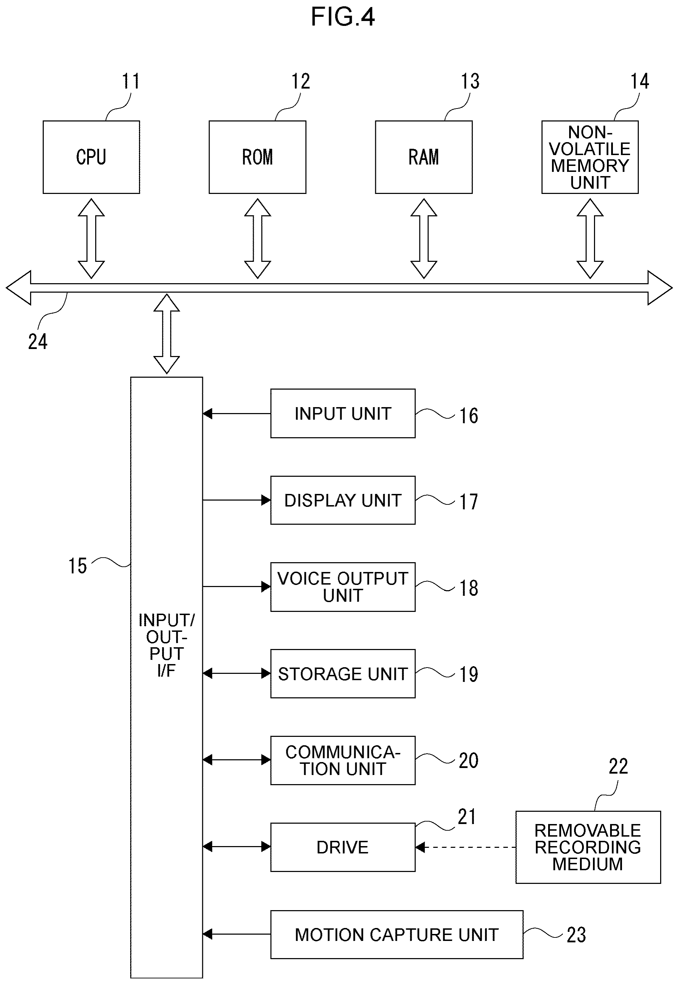

FIG. 4 is a block diagram illustrating a hardware configuration example of each of the computer devices serving as the performer terminals 1 and the audience terminals 2 in FIG. 3.

Note that the hardware configuration of the computer device serving as the server device 3 can be similar to that in FIG. 4 except that a motion capture unit 23 to be described later is provided.

As illustrated, each of the computer devices includes a CPU 11. The CPU 11 functions as an arithmetic processing unit that performs various types of processing, and executes various types of processing in accordance with a program stored in a ROM 12 and a nonvolatile memory unit 14 such as an electrically erasable programmable read-only memory (EEP-ROM) or a program loaded from a storage unit 19 to a RAM 13. The RAM 13 also appropriately stores data and the like necessary for the CPU 11 to execute various types of processing.

The CPU 11, the ROM 12, the RAM 13, and the nonvolatile memory unit 14 are mutually connected via a bus 24. An input/output interface (I/F) 15 is also connected to the bus 24.

An input unit 16 including an operator and an operation device is connected to the input/output interface 15. Various operators and operation devices such as a keyboard, a mouse, a key, a dial, a touch panel, a touch pad, and a remote controller are assumed as the input unit 16.

The input unit 16 detects a user operation. The CPU 11 interprets a signal in accordance with the input operation.

Furthermore, a display unit 17 and a voice output unit 18 are integrally or separately connected to the input/output interface 15. The display unit 17 includes a liquid crystal display (LCD) and an organic electro-luminescence (EL) display. The voice output unit 18 includes a speaker.

The display unit 17 is used for displaying various types of information, and includes, for example, a display device provided in a housing of a computer device and a separate display device connected to the computer device.

The display unit 17 displays images for various types of image processing and moving images to be processed on a display screen based on an instruction from the CPU 11. Furthermore, the display unit 17 displays, for example, various operation menus, icons, and messages as a graphical user interface (GUI) based on an instruction from the CPU 11.

The storage unit 19 and a communication unit 20 may be connected to the input/output interface 15. The storage unit 19 includes a hard disk drive (HDD) and a solid-state memory. The communication unit 20 includes a modem.

The communication unit 20 performs communication processing via a transmission path such as the Internet, wired/wireless communication with various devices, and communication including bus communication.

The computer devices serving as the performer terminals 1 and the audience terminals 2 in FIG. 3 can perform data communication with the server device 3 by providing the communication unit 20.

A drive 21 is also connected to the input/output interface 15 as necessary. A removable recording medium 22 such as a magnetic disk, an optical disk, a magneto-optical disk, and a semiconductor memory is appropriately mounted.

The drive 21 can read a data file such as a program used for each piece of processing from the removable recording medium 22. The storage unit 19 stores the read data file. The display unit 17 and the voice output unit 18 output images and voices contained in the data file. Furthermore, a computer program and the like read from the removable recording medium 22 are installed in the storage unit 19 as necessary.

Furthermore, the motion capture unit 23 is connected to the input/output interface 15.

The motion capture unit 23 three-dimensionally measures the motion of the body of a target person (person who is user: i.e., performer or member of audience). Specifically, the motion capture unit 23 includes an imaging unit that obtains a captured image of the target person, and estimates a skeleton model of the target person based on the captured image. The skeleton model is information including three-dimensional position data on a plurality of specific parts such as joints of a target person. The motion capture unit 23 repeatedly estimates such a skeleton model at a predetermined cycle to three-dimensionally measure the motion of the body of the target person.

Note that the motion capture can also be performed based on a depth image obtained by a depth sensor such as a ToF sensor. A specific approach thereof is not particularly limited.

In a computer device having a hardware configuration as described above, for example, software for the processing of the embodiment can be installed via network communication performed by the communication unit 20 or the removable recording medium 22. Alternatively, the ROM 12, the storage unit 19, or the like may preliminarily store the software.

Here, in the embodiment, the output sound control based on the performance operation speed in the embodiment described above is performed on the side of a terminal of each participant in the virtual music live show.

Therefore, in the embodiment, the performer terminals 1 and the audience terminals 2 preliminarily store the performance sound data and the short-sound data described above before the start of the virtual music live show.

Performance sound data for each performer (normal version sound data and arranged version sound data for each performer) used for the output sound control in the embodiment and the short-sound data are hereinafter collectively referred to as a "sound data set D1".

Furthermore, in the embodiment, an approach is adopted in which the performer terminals 1 and the audience terminals 2 generate images for reproducing the VR space serving as the live venue of the virtual music live show. This eliminates the need for the server device 3 to perform processing of acquiring motion capture data (in example, data of skeleton model) from a terminal of each participant and sequentially reproducing and distributing a reproduction image of the VR space based on the acquired motion capture data on each participant, and can thus reduce a processing load on the server device 3.

In order to enable the reproduction image of the VR space described above to be generated in the terminal of each participant, in the embodiment, various types of data such as material data necessary for generating the visualized image of the VR space are also preliminarily stored in the performer terminals 1 and the audience terminals 2.

Such various types of data necessary for generating the visualized image of the VR space will be hereinafter referred to as "VR space data D2".

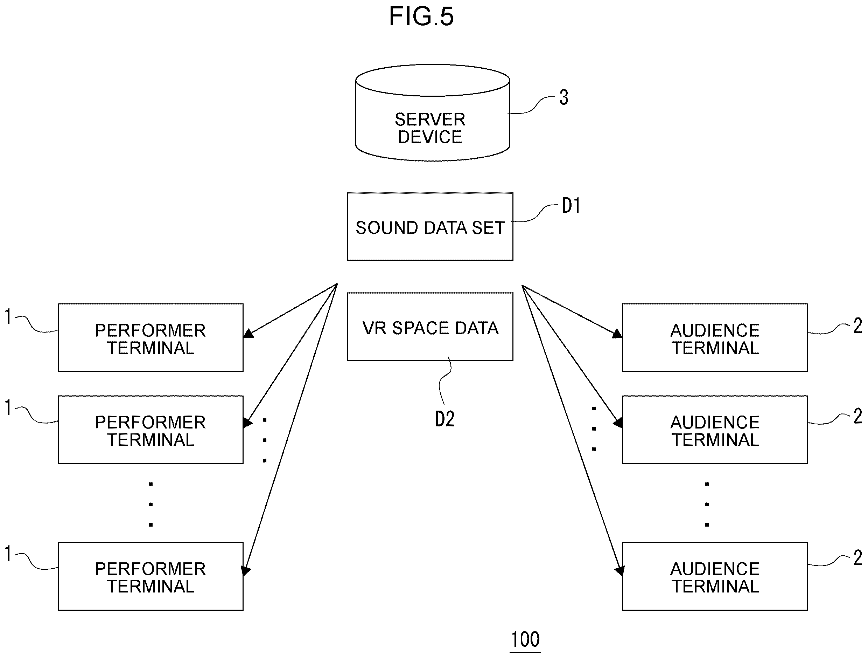

FIG. 5 is an explanatory diagram of data exchanged between the performer terminals 1 and the audience terminals 2 and the server device 3 in the VR system 100 of the embodiment.

As illustrated, in the VR system 100 in this case, the performer terminals 1 and the audience terminals 2 sequentially transmit skeleton model data thereon (i.e., skeleton model data on users of terminals) to the server device 3.

Furthermore, the server device 3 transmits the received pieces of skeleton model data on all the participants to the performer terminals 1 and the audience terminals 2.

In the embodiment, such processing of sequentially transmitting skeleton model data from the performer terminals 1 and the audience terminals 2 to the server device 3 and processing of sequentially transmitting pieces of skeleton model data on all the members from the server device 3 to the performer terminals 1 and the audience terminals 2 are performed within both the above-described period of practice and the period after the start of the performance.

Note that the server device 3 transmitting the pieces of skeleton model data on all the participants is merely an example. It is conceivable that skeleton model data on a user of a terminal, which is a transmission destination, is not transmitted. In this case, the terminal of each participant directly uses skeleton model data estimated by the motion capture unit 23 of the device thereof in generating an image of an avatar thereof.

Furthermore, in this case, the performer terminals 1 directly use skeleton model data estimated by the motion capture unit 23 of the device thereof in estimating the performance operation speed of the user (performer) of the device thereof.

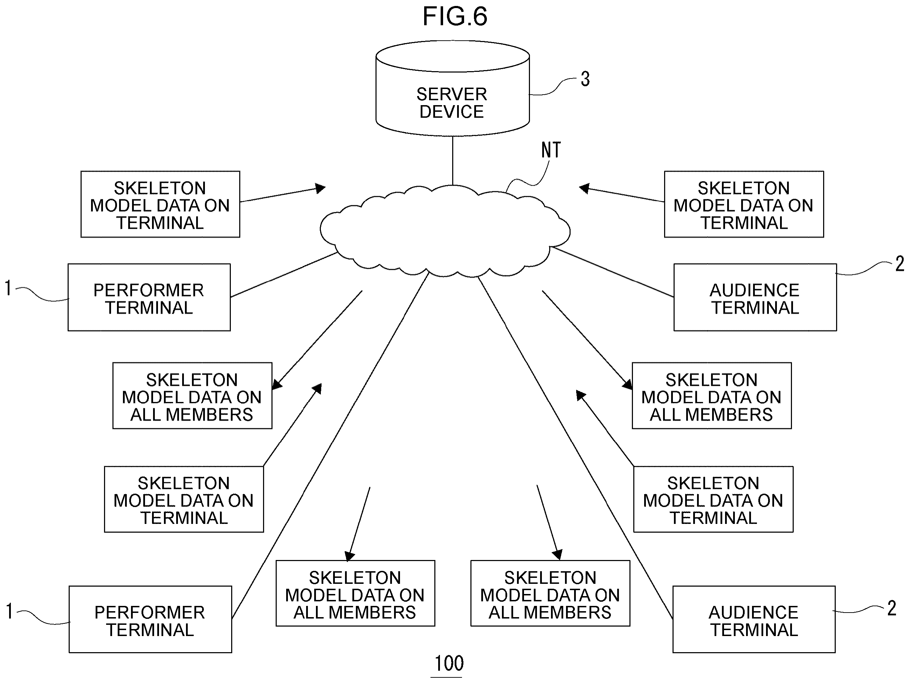

Furthermore, in the VR system 100 of the embodiment, the server device 3 performs processing of transmitting the sound data set D1 and the VR space data D2 described above to the performer terminals 1 and the audience terminals 2 as illustrated in FIG. 6 at the timing before the start of the virtual music live show. It is conceivable that the transmission processing is performed in response to a transmission request from the performer terminals 1 and the audience terminals 2, for example.

The performer terminals 1 and the audience terminals 2 perform processing of storing the sound data set D1 and the VR space data D2 transmitted from the server device 3 as described above in a predetermined storage device, specifically, the storage unit 19 in the example.

### [1-3. Functional Configuration Example]

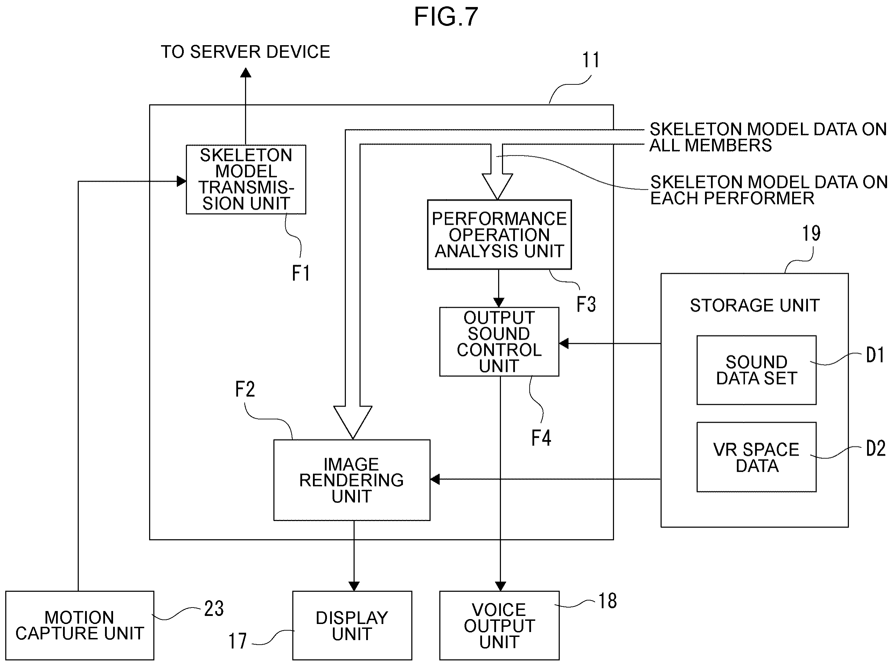

FIG. 7 is an explanatory diagram of functions of the performer terminals 1 and the audience terminals 2 for achieving the output sound control approach in the embodiment described above.

Specifically, FIG. 7 illustrates, as functional blocks, the functions of the CPU 11 of each terminal for achieving the output sound control approach in the embodiment, and also illustrates the motion capture unit 23 and the storage unit 19 in FIG. 4.

As illustrated, the CPU 11 of each terminal has functions of a skeleton model transmission unit F1, an image rendering unit F2, a performance operation analysis unit F3, and an output sound control unit F4.

The skeleton model transmission unit F1 achieves the function of transmitting the skeleton model data on a terminal described in FIG. 5. Specifically, the skeleton model transmission unit F1 performs processing of transmitting skeleton model data sequentially obtained by the motion capture unit 23 to the server device 3 via the communication unit 20.

The image rendering unit F2 generates (renders) an image reproducing the VR space, which is live space of the virtual music live show, based on the pieces of skeleton model data on all the members (all participants) transmitted by the server device 3 and VR space data stored in the storage unit 19.

The display unit 17 displays the reproduction image generated by the image rendering unit F2.

The performance operation analysis unit F3 performs analysis processing related to a performance operation for each performer based on the skeleton model data on each performer among the pieces of skeleton model data on all the members transmitted by the server device 3. Specifically, the performance operation analysis unit F3 in the example determines the presence or absence of a performance operation of a performer for each performer, and estimates the frequency of the performance operation as a performance operation speed.

In the embodiment, the performance operation analysis unit F3 determines the presence or absence of the performance operation as follows.

That is, for a finger using performer playing a finger performance instrument in which a performance operation is performed with a finger, a surface having a predetermined positional relation with a surface Sp of a hand of the finger using performer is determined as a virtual determination surface VD, and the presence or absence of contact of the finger of the finger using performer to the virtual determination surface VD is determined as the presence or absence of the performance operation.

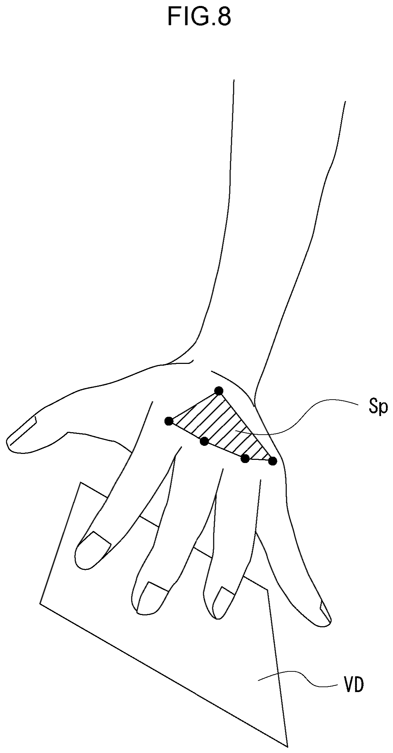

FIG. 8 is an explanatory diagram of the virtual determination surface VD determined in determining the presence or absence of a performance operation of the finger using performer as described above.

In determining the virtual determination surface VD, first, the surface Sp of the hand is identified based on the skeleton model data on the finger using performer. As illustrated, the surface Sp of the hand is identified as a surface formed by a joint of a wrist and the bases of fingers excluding at least the thumb in the skeleton model data.

Then, the performance operation analysis unit F3 in the example determines the virtual determination surface VD as a surface parallel to the surface Sp of the hand and separated in the palm direction. More specifically, the performance operation analysis unit F3 of the example determines the virtual determination surface VD as a surface parallel to the surface Sp of the hand and separated in the palm direction by a distance of approximately 4 cm. Here, although 4 cm is intended to be an average value of the length of a human finger, a specific numerical value is not limited thereto.

When a target performer uses his/her finger in the performance, the performance operation analysis unit F3 determines, as determination of the presence or absence of a performance operation, whether or not a fingertip in the skeleton model data on the finger using performer contacts the virtual determination surface VD determined as described above.

Adopting the approach of determining the presence or absence of a performance operation by using the virtual determination surface VD as described above eliminates the need for identifying the actual positional relation between the finger using performer and the finger performance instrument in estimating the performance operation speed of the finger using performer.

Therefore, it is unnecessary to identify the position of the finger performance instrument by using a captured image obtained by capturing the finger performance instrument. A processing load necessary for estimating a performance operation speed can be reduced.

Furthermore, when the performance operation speed is determined after the positional relation between the finger using performer and the finger performance instrument is identified, the performance operation speed cannot be estimated if the positional relation between the finger using performer and the finger performance instrument fails to be identified. Such a situation in which the performance operation speed cannot be estimated can be avoided by adopting the approach using the virtual determination surface as described above, so that the performance operation speed can be more stably estimated.

Furthermore, in the example, the virtual determination surface VD is determined as a surface parallel to the surface Sp of the hand and separated in the palm direction. The presence or absence of a performance operation can thereby be appropriately determined also in a case where the finger using performer plays, in particular, a keyboard instrument such as a keyboard and a piano.

Here, the performance operation analysis unit F3 determines the presence or absence of a performance operation based on motion in skeleton model data for a performer other than the finger using performer. For example, the presence or absence of a performance operation of a performer who plays a percussion instrument such as a drum can be easily determined from the motion in the skeleton model data since the performer moves portions ahead of his/her arms relatively vigorously at a performance. Furthermore, a portion ahead of an arm portion is also moved relatively vigorously when a string of a stringed instrument such as a guitar and a bass is plucked. The presence or absence of a performance operation can be easily determined from motion in the skeleton model data.

Note that, when the presence or absence of a performance operation on a drum is determined for a portion on which a performance operation is performed by using sticks (portion excluding snare portion), it is conceivable to determine the presence or absence of a performance operation based on the motions of the sticks.

Furthermore, when the presence or absence of a performance operation on the snare portion of a drum is determined, the presence or absence of the performance operation is determined based on the motion of a foot of a performer.

Note that it is not essential to determine the presence or absence of a performance operation by using the virtual determination surface VD for a finger-used instrument. Even in a case of a finger-used instrument, it is conceivable to determine the presence or absence of a performance operation based on the motion of the performer in skeleton model data without using the virtual determination surface VD for a specific instrument.

Note that it is conceivable that the performance operation analysis unit F3 determines which performer play which instrument by transmitting information for the performer terminals 1 to identify performance instruments of users of devices thereof as metadata of skeleton model data and using the metadata, for example. Note that this is merely an example. It is conceivable to adopt another approach of transmitting information indicating the correspondence relation between the performer terminals 1 and instruments used from the server device 3 to the performer terminals 1 and the audience terminals 2 before the start of the virtual music live show, for example.

In FIG. 7, the output sound control unit F4 selects, for each performer, sound data in accordance with a performance operation speed estimated by the performance operation analysis unit F3 among normal version sound data and arranged version sound data prepared for each performer, and performs control to output the selected pieces of sound data for the respective performers in synchronization with each other.

In the example, the processing for separately outputting the normal version sound data and the arranged version sound data in accordance with the performance operation speed as described above is started with an instruction to start the performance of a musical piece as a trigger.

Here, it is conceivable that the instruction to start the performance of the musical piece is given to the server device 3 by one of the performers participating in the virtual music live show performing a predetermined operation on his/her performer terminal 1, for example. In this case, the instruction to start the performance is transmitted to the performer terminals 1 and the audience terminals 2 via the server device 3.

Furthermore, in the example, the output sound control unit F4 performs the output sound control (short-sound output control) using short-sound data as described above within the period from the start of the virtual music live show to the start of the performance described above as the period of practice in FIG. 2. Specifically, control is performed to output short-sound data in synchronization with the timing of a performance operation. The timing of a performance operation can be identified based on the determination result of the presence or absence of a performance operation performed by the performance operation analysis unit F3.

Furthermore, the output sound control unit F4 in the example performs the short-sound output control also after the start of the performance when the performance operation speed of the performer is lowered to the extent of being regarded as indicating a sporadic performance operation.

Sound data on each performer obtained by the output sound control of the output sound control unit F4 is input to the voice output unit 18, and sound is emitted based on the sound data.

### [1-4. Processing Procedure]

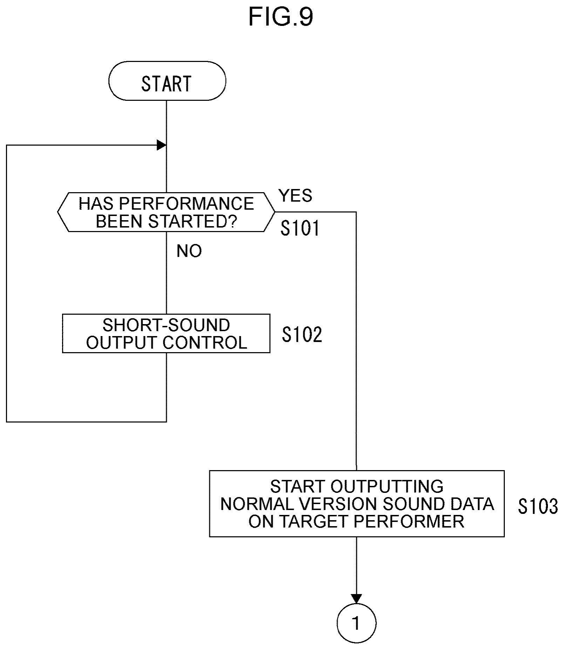

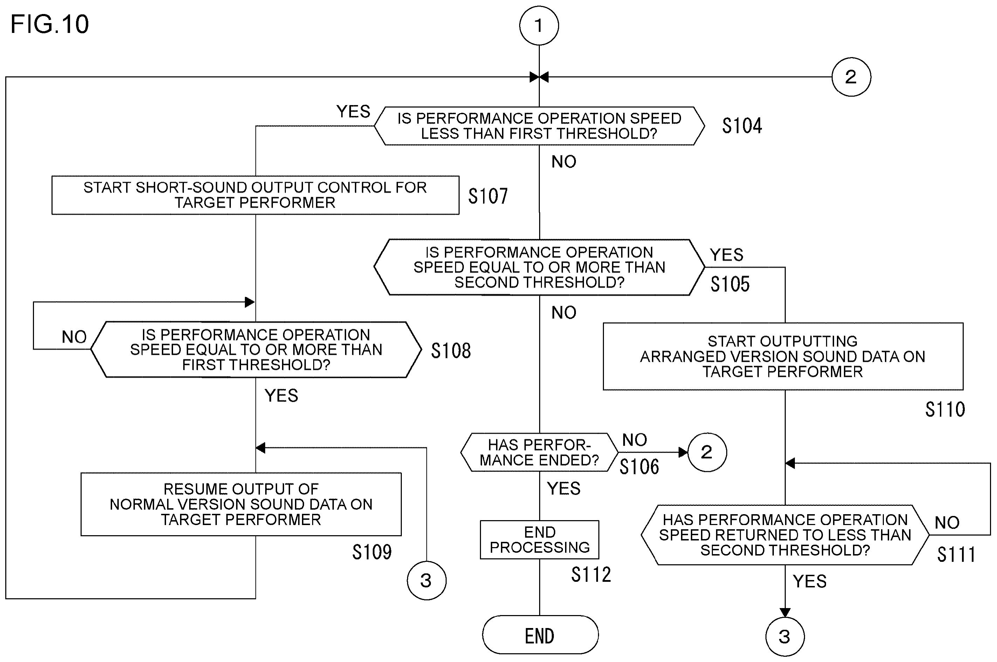

An example of a specific processing procedure for achieving output sound control in the embodiment will be described with reference to flowcharts of FIGS. 9 and 10.

In the embodiment, CPUs 11 of the performer terminals 1 and the audience terminals 2 execute the processing in FIGS. 9 and 10.

As understood from the above description, the output sound control in the embodiment is to be performed for each performer. The CPUs 11 perform the processing in FIGS. 9 and 10 for each performer. Furthermore, FIGS. 9 and 10 illustrate the procedure of processing to be executed after the start of the virtual music live show.

In FIG. 9, in Step S101, the CPU 11 determines whether or not a performance has been started. Specifically, it is determined whether or not the instruction to start the performance as described above has been given.

When it is not determined in Step S101 that the performance has been started, the CPU 11 performs the short-sound output control in Step S102, and returns to Step S101. In the processing of the short-sound output control, the presence or absence of a performance operation is determined based on skeleton model data on a target performer. When it is determined that a performance operation is performed, control is performed to output short-sound data in synchronization with the timing of the performance operation.

Loop processing of Step S101 to S102 to S101 achieves a behavior in practice as described above.

Furthermore, when it is determined in Step S101 that the performance has been started, the CPU 11 proceeds to Step S103, and starts outputting normal version sound data on the target performer.

Note that, for confirmation, when a musical piece has a period in which the target performer does not give a performance, sound data within the non-performance period is set as soundless data in the normal version sound data and the arranged version sound data. That is, for example, for the target performer, when a non-performance period is provided at the start of the musical piece, a soundless state continues within the non-performance period even when the output of the normal version sound data is started as described above.

The CPU 11 advances the processing to Step S104 in FIG. 10 in response to the execution of the processing in Step S103.

In Step S104 in FIG. 10, the CPU 11 determines whether or not the performance operation speed is less than a first threshold. The first threshold is used for determining whether or not the above-described short-sound output control is to be executed.

When it is not determined in Step S104 that the performance operation speed is less than the first threshold, the CPU 11 proceeds to Step S105, and determines whether or not the performance operation speed is equal to or more than a second threshold. The second threshold is used for determining the start/end of an arranged performance, and the second threshold > the first threshold holds.

When it is not determined in Step S105 that the performance operation speed is equal to or more than the second threshold, the CPU 11 proceeds to Step S106, and determines whether or not the performance has ended. That is, it is determined whether or not a predetermined condition preliminarily determined for ending the processing in FIGS. 9 and 10 has been satisfied. The condition includes whether or not the timing of the end of the musical piece (timing of terminal of musical piece), whose performance has been determined to be started in Step S101, has come. When it is not determined in Step S106 that the performance has ended, the CPU 11 returns to Step S104.

After the start of the performance, the processing of Step S104 to S105 to S106 to S104 as described above forms a loop of waiting for satisfaction of one of conditions for ending the performance including a performance operation speed less than the first threshold and a performance operation speed equal to or more than the second threshold.

When it is determined in Step S104 that the performance operation speed is less than the first threshold, the CPU 11 proceeds to Step S107, and starts the short-sound output control for the target performer. The CPU 11 executes the processing of the short-sound output control as processing in parallel with the processing in FIGS. 9 and 10.

Then, in Step S108 subsequent to Step S107, the CPU 11 waits until the performance operation speed becomes equal to or more than the first threshold.

When the performance operation speed becomes equal to or more than the first threshold in Step S108, the CPU 11 proceeds to Step S109, resumes the output of the normal version sound data on the target performer, and returns to Step S104.

Also after the start of the performance, when the performance operation speed of the performer is lowered to the extent of being regarded as indicating a sporadic performance operation, the short-sound output control is performed by the processing of Step S104 to S107 to S108 to S109 above. When the performance operation speed is then raised to equal to or more than the first threshold, the output of the normal version sound data is resumed.

In the case, the output of the normal version sound data is resumed from a reproduction position in accordance with an elapsed time from the start of the performance.

Furthermore, when it is determined in Step S105 that the performance operation speed is equal to or more than the second threshold, the CPU 11 proceeds to Step S110, and starts outputting arranged version sound data on the target performer.

In the case, the output of the normal version sound data is started from a reproduction position in accordance with an elapsed time from the start of the performance.

In Step S111 subsequent to Step S110, the CPU 11 waits until the performance operation speed returns to less than the second threshold. Then, when the performance operation speed returns to less than the second threshold, the CPU 11 proceeds to Step S109 above, resumes the output of the normal version sound data on the target performer, and returns to Step S104.

The processing of Step S105 to S110 to S111 to S109 to S104 above enables the output of the arranged version sound data to be started in a case where the target performer is estimated to have started an arranged performance, and enables the output of the normal version sound data to be resumed in a case where the arranged performance is estimated to have ended.

When it is determined in Step S106 that the performance has ended, the CPU 11 proceeds to Step S112, performs end processing, and ends a series of processing in FIGS. 9 and 10.

Here, when the normal version sound data and the arranged version sound data are being output, processing of stopping the reproduction output of sound data and the like are performed as the end processing of Step S112.

### <2. Second Embodiment>

Next, a second embodiment will be described.

In the second embodiment, a staging effect is presented in accordance with the degree of elation of participants in a virtual music live show.

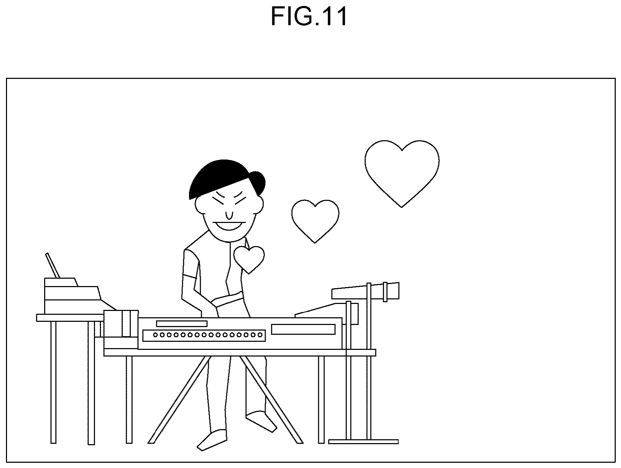

FIG. 11 illustrates an example of the staging effect.

In the example, an effect based on visual information is presented as the staging effect in accordance with the degree of elation of participants. Specifically, here, the staging effect (emote) is presented in a mode in which an image representing a heart-shaped virtual object as illustrated is superimposed and displayed on a reproduction image of VR space.

Note that the staging effect based on visual information in accordance with the elation degree is not limited to be displayed as the heart-shaped virtual object as described above. Various display approaches are conceivable including displaying a virtual object having another shape such as a particulate shape.

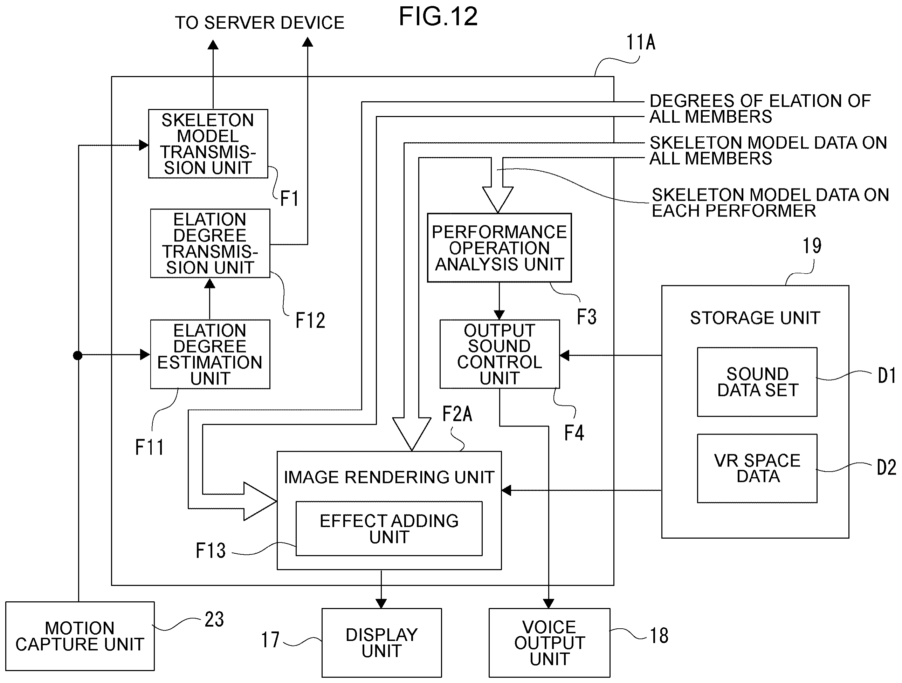

FIG. 12 illustrates various functions of each of CPUs 11A of the performer terminals 1 and the audience terminals 2 in the second embodiment in which a staging effect function is achieved in accordance with the degree of elation.

Note that, in the following description, portions similar to those already described are denoted by the same reference signs, and description thereof will be omitted.

A CPU 11A of the second embodiment is different from the CPU 11 (FIG. 7) of the first embodiment in that the CPU 11A includes an elation degree estimation unit F11 and an elation degree transmission unit F12 and that the CPU 11A includes an image rendering unit F2A instead of the image rendering unit F2.

Note that, also in this case, the processing of the performance operation analysis unit F3 and that of the output sound control unit F4 are similar to that in the first embodiment, so that redundant description is avoided.

The elation degree estimation unit F11 estimates the degree of elation of a terminal user based on motion capture data (skeleton model data in example) obtained by a motion capture unit 23. That is, when provided in a performer terminal 1, the elation degree estimation unit F11 serves as a functional unit that estimates the degree of elation of a performer based on sensing data from a sensor unit that senses a performer. When provided in an audience terminal 2, the elation degree estimation unit F11 serves as a functional unit that estimates the degree of elation of the performer based on sensing data from a sensor unit that senses an audience.

The elation degree here is an evaluation index indicating a feeling of elation of a participant.

In the example, the elation degree estimation unit F11 estimates the elation degree based on a result of analyzing the motion of the terminal user indicated by the skeleton model data obtained by the motion capture unit 23. Various approaches are conceivable as an approach of estimating the elation degree based on the motion of the terminal user. In an example, an approach is adopted in which an elation degree is estimated based on, for example, the speed of the motion of a specific part such as an arm, a hand, a head, and a foot and the magnitude of the motion. In this case, it is conceivable to calculate the elation degree so that the elation degree has a positive correlation with the speed of the motion of a specific part and the magnitude of the motion.

The elation degree estimation unit F11 repeatedly estimates the elation degree for each predetermined unit time.

The elation degree transmission unit F12 transmits the elation degrees sequentially estimated by the elation degree estimation unit F11 to the server device 3.

The server device 3 in this case transmits the elation degrees transmitted by elation degree transmission units F12 of the performer terminals 1 and the audience terminals 2, that is, the degrees of elation of all the participants to the performer terminals 1 and the audience terminals 2.

An image rendering unit F2A is different from the image rendering unit F2 in that the image rendering unit F2A includes an effect adding unit F13.

The effect adding unit F13 performs control to present a predetermined staging effect to at least one of the performers and the audience based on the degrees of elation of all the members received from the server device 3.

Specifically, the effect adding unit F13 in the example performs control to display virtual objects (effect components) having a heart shape or the like as illustrated in FIG. 11 to an avatar having an elation degree of equal to or more than a predetermined threshold among avatars of the participants in the VR space.

In the example, the effect adding unit F13 performs processing of adding a staging effect in accordance with the magnitude of the elation degree as described above during the performance of a musical piece.

In the case, the effect adding unit F13 in the example changes the mode of the staging effect in accordance with the magnitude of the elation degree. Specifically, at least one of the number, color, and brightness of visual effect components serving as the virtual object having a heart shape or the like in FIG. 11 is changed in accordance with the magnitude of the elation degree.

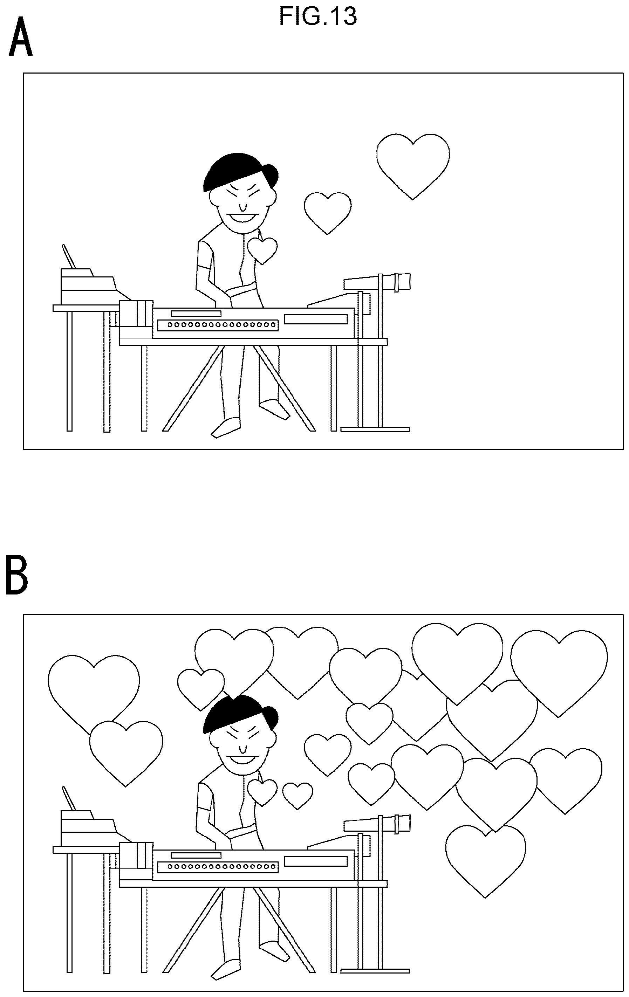

FIG. 13 illustrates an example in which the number of visual effect components is changed in accordance with the magnitude of an elation degree.

For example, when the elation degree becomes equal to or more than the above-described threshold, a predetermined number of effect components having a heart shape or the like as illustrated in FIG. 13A is displayed to an avatar of a participant having the elation degree of equal to or more than the threshold. Then, when the elation degree of the participant is raised to a higher threshold or more, as illustrated in FIG. 13B, the number of effect components to be displayed is increased as compared with that in the case of FIG. 13A.

Here, in the example, the effect components have animations.

The effect adding unit F13 in the example performs control to synchronize the motions of the effect components having animations as described above with the rhythm of reproduction sounds of performance sound data. That is, the staging effect is synchronized with the rhythm of reproduction sounds of performance sound data. In this case, for example, the CPU 11A performs processing of analyzing performance sound data being output and detecting the rhythm (e.g., BPM) of reproduction sounds. The effect adding unit F13 performs processing of synchronizing the motions of the effect components with the rhythm detected as described above.

Note that, although an example, in which pieces of information on the elation degrees for all the members are transmitted to the performer terminals 1 and the audience terminals 2, has been described above, this is merely an example. It is conceivable that the elation degree of a user of a terminal, which is a transmission destination, is not transmitted. In this case, in a terminal of each participant, the elation degree estimated by the elation degree estimation unit F11 of a device thereof is directly used in the processing of the effect adding unit F13.

Furthermore, although an example, in which visual information of a staging effect is displayed only to the avatar having an elation degree of equal to or more than a predetermined threshold has been described above, this is not a limitation.

For example, it is conceivable that, when a predetermined number or more of performers have elation degrees of equal to or more than a predetermined threshold, the visual information of a staging effect is displayed to avatars of all the performers. Alternatively, it is conceivable that, when a predetermined number or more of members of the audience have elation degrees of equal to or more than a predetermined threshold, the visual information of a staging effect is displayed to avatars of all the members of the audience.

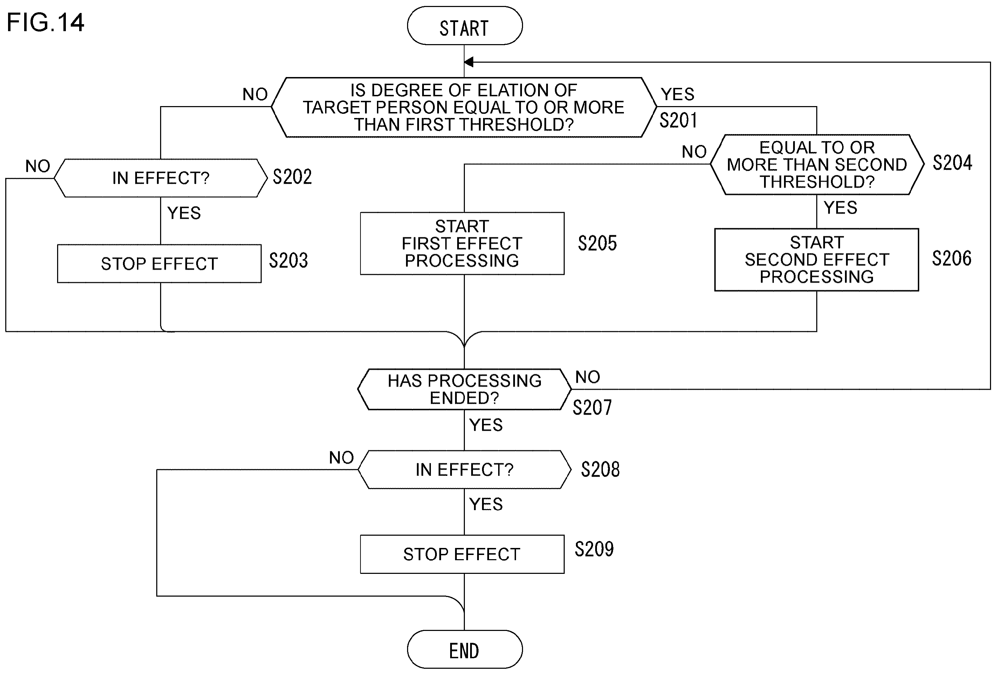

FIG. 14 is a flowchart illustrating an example of a processing procedure to be executed by the CPU 11A for achieving the function of the effect adding unit F13 described above.

Note that the CPU 11A executes the processing in the figure for each participant.

In Step S201, the CPU 11A determines whether or not a target person (participant) has an elation degree of equal to or more than the first threshold. When the target person does not have the elation degree of equal to or more than the first threshold, the CPU 11A proceeds to Step S202, and determines whether or not an effect is being executed. That is, it is determined whether or not a staging effect is already being executed.

When the effect is not being executed, the CPU 11A advances the processing to Step S207.

Furthermore, when the effect is being executed, the CPU 11A stops the effect being executed by effect stop processing in Step S203, and advances the processing to Step S207.

Furthermore, when it is determined in Step S201 above that the target person has an elation degree of equal to or more than the first threshold, the CPU 11A proceeds to Step S204, and determines whether or not the elation degree is equal to or more than the second threshold. Here, the second threshold > the first threshold holds.

When it is not determined in Step S204 that the elation degree is equal to or more than the second threshold, the CPU 11A proceeds to Step S205, and starts first effect processing. That is, control is performed to display a predetermined number of effect components as illustrated above in FIG. 13A above to the target avatar. In the case, in the example, control is performed to synchronize the motions of the effect components with the rhythm of reproduction sounds of the performance sound data. Note that synchronizing the motions of the effect components with the rhythm of reproduction sounds of the performance sound data as described above applies to second effect processing (S206) to be described below.

In response to the start of the first effect processing in Step S205, the CPU 11A advances the processing to Step S207.

Furthermore, when it is determined in Step S204 that the elation degree is equal to or more than the second threshold, the CPU 11A proceeds to Step S206, starts the second effect processing, and advances the processing to Step S207.

In the second effect processing, a larger number of effect components than those in the first effect processing are displayed to the target avatar.

In Step S207, the CPU 11A determines whether or not the processing has ended. That is, it is determined whether or not a predetermined condition preliminarily determined for ending the processing in FIG. 14 has been satisfied. The condition includes arrival of the timing of the end of a musical piece being performed, for example.

When it is not determined in Step S207 that the processing has ended, the CPU 11A returns to Step S201.

In contrast, when it is determined in Step S207 that the processing has ended, the CPU 11A proceeds to Step S208, and determines whether or not the effect is being executed. When the effect is being executed, the CPU 11A performs effect stop processing in Step S209, and ends a series of processing in FIG. 14. When the effect is not being executed, the CPU 11A passes up Step S209, and ends the series of processing in FIG. 14.

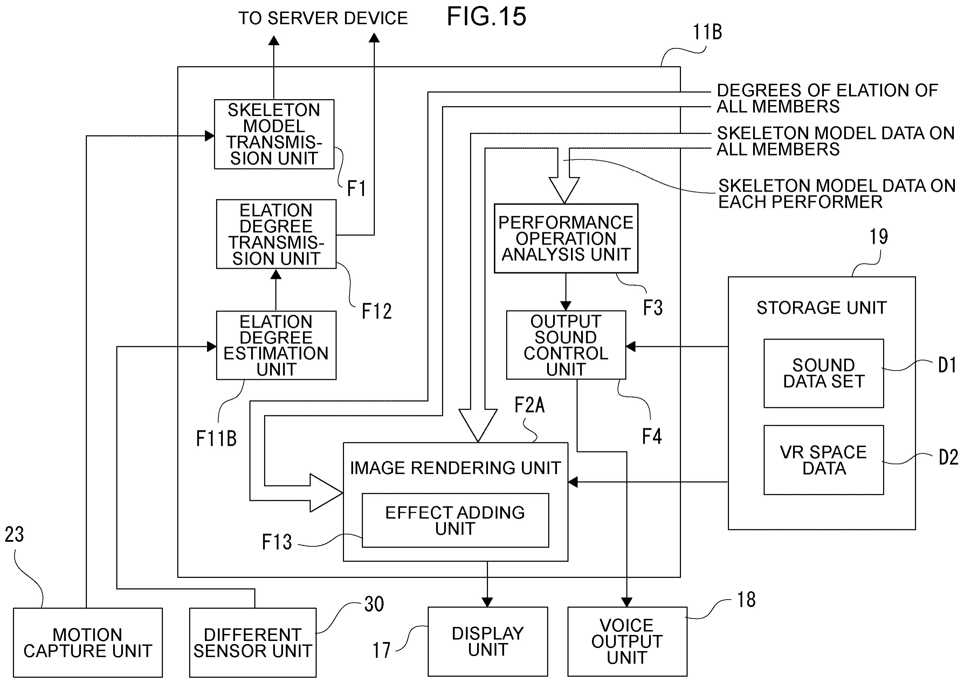

Here, although an example, in which the elation degree is estimated based on motion capture data obtained by the motion capture unit 23, has been described above, it is conceivable that the elation degree is estimated based on sensing data from a different sensor unit 30 provided separately from the motion capture unit 23 as illustrated in FIG. 15.

Specifically, it is conceivable that examples of the different sensor unit 30 include an acceleration sensor and a biological information sensor. The acceleration sensor is provided in a performer terminal 1 or an audience terminal 2. The biological information sensor detects biological information on a terminal user (performer or member of audience as participant).

Instead of the CPUs 11A, CPUs 11B are provided in the performer terminals 1 and the audience terminals 2 in this case. A CPU 11B is different from the CPU 11A in that the CPU 11B includes, instead of the elation degree estimation unit F11, an elation degree estimation unit F11B that estimates the elation degree based on sensing data obtained by the different sensor unit 30.

Here, when the different sensor unit 30 is an acceleration sensor, an action given to a terminal used, such as swinging and hitting the terminal used, can be detected for, for example, a participant as a member of the audience.

Therefore, in this case, it is conceivable that the elation degree estimation unit F11B estimates an elation degree based on the magnitude, frequency, and the like of an action given to a terminal used, which are estimated from sensing data from the acceleration sensor serving as the different sensor unit 30.

Furthermore, when the different sensor unit 30 is a biological information sensor, for example, the heart rate, brain waves, and the like of a performer or a member of the audience can be detected.

Therefore, in this case, it is conceivable that the elation degree estimation unit F11B estimates the elation degree based on information such as the heart rate and the brain waves of a terminal user (performer or member of audience) identified from sensing data from the biological information sensor serving as the different sensor unit 30.

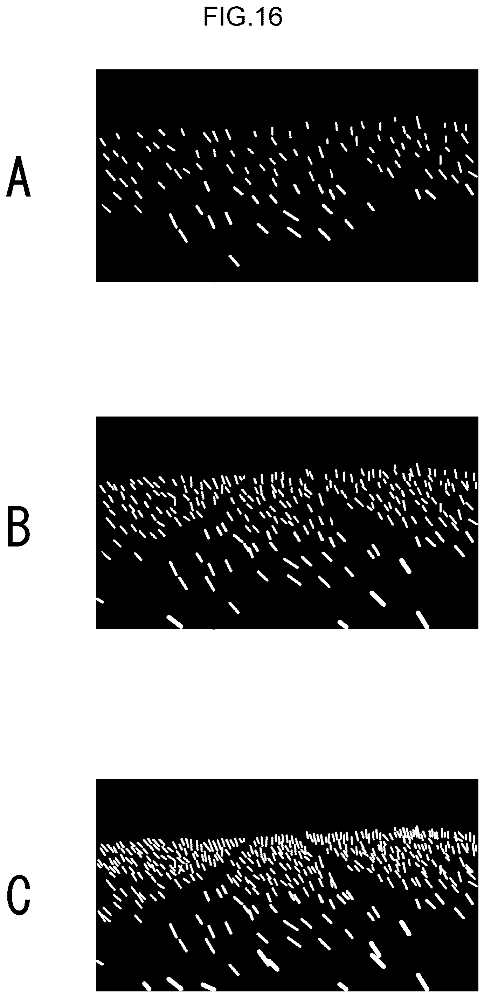

Note that, although an example in which a heart-shaped virtual object is displayed has been described above as an example of the visual information serving as a staging effect, a staging effect of displaying a virtual object serving as a penlight as illustrated in FIG. 16 is also conceivable as the staging effect based on visual information.

FIG. 16 illustrates an example in which the number of penlights displayed is increased in stages in accordance with the magnitude of an elation degree (see transition from FIG. 16A to FIG. 16C).

Note that, in relation to such penlight performance, it is conceivable that not only the number of penlights but the color, brightness, or combination thereof are changed in accordance with the magnitude of an elation degree.

Note that, although a case where visual information is presented has been illustrated above as presentation of a staging effect in accordance with an elation degree, it is also conceivable to present, as the staging effect, a staging effect based on, for example, auditory information and tactile information such as vibration other than the visual information.

It is conceivable to change the mode of a staging effect in accordance with the magnitude of an elation degree and synchronize the staging effect with the rhythm of a reproduction sound of performance sound data also when the staging effect based on information other than visual information is presented as described above.

### <3. Variations>

Note that the embodiments are not limited to the above-illustrated specific examples, and can adopt various configurations in variations.

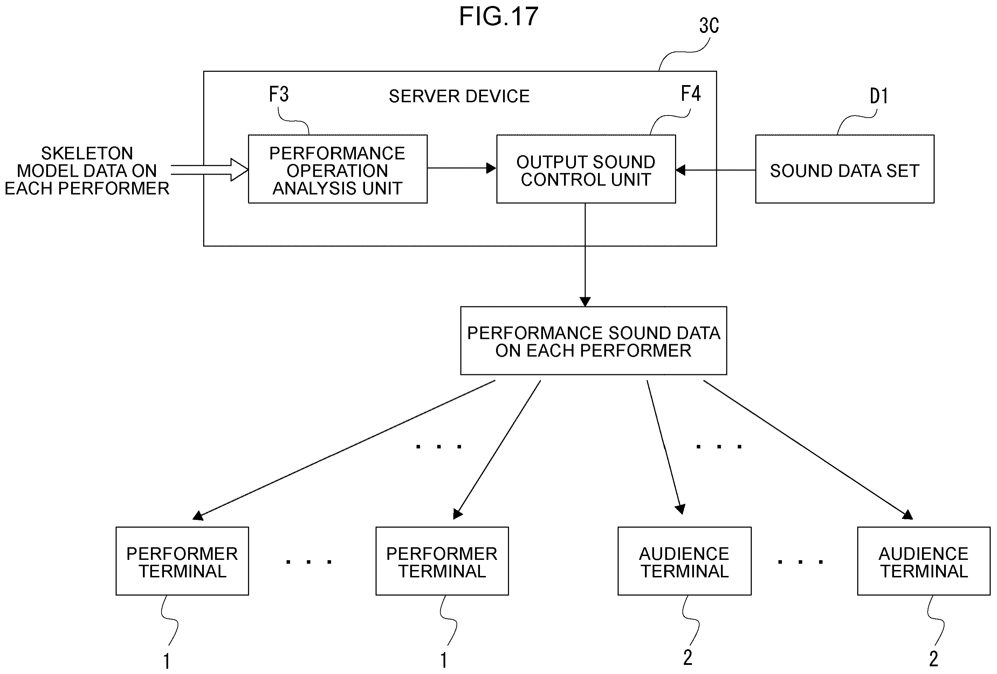

For example, although an example has been described above in which the performer terminals 1 and the audience terminals 2 perform processing of estimating a performance operation speed and processing of output sound control in the embodiments, it is conceivable that a server device 3C performs processing of estimating the performance operation speed and processing of output sound control in the embodiments as illustrated in FIG. 17.

As illustrated, the server device 3C includes functional units serving as the performance operation analysis unit F3 and the output sound control unit F4. The performance operation analysis unit F3 estimates a performance operation speed for each performer.

Skeleton model data on each performer transmitted from each of the performer terminals 1 is input to the performance operation analysis unit F3 in this case.

In this case, the server device 3C transmits performance sound data on each performer obtained under the output sound control of the output sound control unit F4 to the performer terminals 1 and the audience terminals 2. In the performer terminals 1 and the audience terminals 2, the voice output unit 18 emits sound based on performance sound data for each performer transmitted as described above.

In this case, it is not necessary to preliminarily store the sound data set D1 in the performer terminals 1 and the audience terminals 2.

Furthermore, although an example has been described above in which a performance operation speed is defined in only two stages (whether or not equal to or more than second threshold) in separately outputting performance sound data, the performance operation speed can be defined in three or more stages. In that case, it goes without saying that not only one type but two or more types of arranged version sound data should be prepared for each performer.

### <4. Program>

Here, in the embodiments, a program is conceivable which causes, for example, a CPU, a digital signal processor (DSP), and a device including the CPU and the DSP to implement functions of the performance operation analysis unit F3, the output sound control unit F4, and the like described with reference to FIGS. 9 and 10 and the like.

That is, the program of the embodiments is allowed to be read by a computer device, and causes the computer device to implement functions of: estimating a performance operation speed for each of a plurality of performers whose avatars are arranged in common virtual space based on pieces of motion capture data on the performers; and selecting performance sound data in accordance with the performance operation speed, which has been estimated, among pieces of performance sound data prepared for each of performance operation speeds for each of the performers, and performing control to output selected pieces of performance sound data for each of the performers in synchronization with each other.

The program as described above can implement the functions of the performance operation analysis unit F3 and the output sound control unit F4 described above in devices serving as the performer terminals 1, the audience terminals 2, the server device 3C, and the like.

The program as described above can be preliminarily recorded in a hard disc drive (HDD) serving as a recording medium built in a device such as a computer device, a ROM in a microcomputer including a CPU, or the like.

Alternatively, the program as described above can be temporarily or permanently stored (recorded) in a removable recording medium such as a flexible disk, a compact disc read only memory (CD-ROM), a magneto optical (MO) disk, a digital versatile disc (DVD), a Blu-ray disc (registered trademark), a magnetic disk, a semiconductor memory, and a memory card. Such a removable recording medium can be provided as so-called packaged software.

Furthermore, such a program can be installed from a removable recording medium to a personal computer or the like, or can be downloaded from a download site via a network such as a local area network (LAN) and the Internet.

Furthermore, such a program is suitable for widely providing the output sound control in the embodiments. For example, a program is downloaded to a personal computer, a mobile information processing device, a mobile phone, a game device, a video device, a personal digital assistant (PDA), and the like to cause the personal computer and the like to function as a device that implements the output sound control approach of the present disclosure.

### <5. Summary of Embodiments>

As described above, the information processing device (performer terminal 1, audience terminal 2, or server device 3C) in the embodiments includes an operation estimation unit (performance operation analysis unit F3) and an output sound control unit (performance operation analysis unit F3). The operation estimation unit estimates a performance operation speed for each performer based on pieces of motion capture data on a plurality of performers whose avatars are arranged in common virtual space. The output sound control unit selects performance sound data in accordance with a performance operation speed estimated by the operation estimation unit among pieces of performance sound data prepared for each of performance operation speeds for each of the performers, and performs control to output selected pieces of performance sound data for each of the performers in synchronization with each other.

According to the configuration, pieces of performance sound data prepared for the respective performers are output in synchronization with each other instead of making a performance sound of each performer flow as it is as before. This achieves a feeling of unity of the performance. Furthermore, as in the above-described configuration, a performance operation speed is estimated for each performer, and the performance sound data is selected in accordance with the performance operation speed. When a performer gives an arranged performance having a higher performance operation speed than that of a normal performance, the corresponding performance sound data can be output, and a live feeling can be improved.

Therefore, according to the embodiments, the feeling of unity of a performance can be achieved while preventing a live feeling from being impaired in a virtual music live show.

Furthermore, in the embodiments, in the information processing device, the operation estimation unit estimates a performance operation speed based on the motion of a skeleton model of a performer estimated based on motion capture data on the performer.

The motion of the body of the performer can be appropriately grasped by using the skeleton model, and the accuracy of estimating a performance operation speed can be enhanced. Furthermore, an amount of information required for estimating the performance operation speed of each performer is reduced by using information narrowed down to a specific part such as a joint, which is referred to as a skeleton model. An amount of processing required for estimating the performance operation speed can be reduced.

Moreover, in the information processing device in the embodiments, the operation estimation unit determines the presence or absence of a performance operation of a performer based on a skeleton model, and estimates the frequency of the performance operation as the performance operation speed.

For example, when the performer plays a keyboard instrument such as a keyboard and a piano, an operation of pressing a keyboard corresponds to the performance operation. When the performer plays a drum, an operation of hitting a drum film surface with sticks and the like correspond to the performance operation. The performance operation speed of the performer can be appropriately estimated by determining the presence or absence of such a performance operation and determining the frequency of the performance operation.

Moreover, in the information processing device in the embodiments, for a finger using performer playing a finger performance instrument in which a performance operation is performed with a finger, the operation estimation unit determines a surface having a predetermined positional relation with a surface of a hand of the finger using performer as a virtual determination surface, and determines the presence or absence of contact of the finger of the finger using performer to the virtual determination surface as the presence or absence of the performance operation.

This eliminates the need for identifying the actual positional relation between the finger using performer and the finger performance instrument in estimating the performance operation speed of the finger using performer.

Therefore, it is unnecessary to identify the position of the finger performance instrument by using a captured image obtained by capturing the finger performance instrument. A processing load necessary for estimating a performance operation speed can be reduced.

Furthermore, when the performance operation speed is determined after the positional relation between the finger using performer and the finger performance instrument is identified, the performance operation speed cannot be estimated if the positional relation between the finger using performer and the finger performance instrument fails to be identified. Such a situation in which the performance operation speed cannot be estimated can be avoided by adopting the approach using the virtual determination surface as described above, so that the performance operation speed can be more stably estimated.

Furthermore, in the information processing device in the embodiments, the operation estimation unit determines a surface parallel to a surface of a hand and separated in the palm direction as the virtual determination surface.

The presence or absence of a performance operation can thereby be appropriately determined in a case where the finger using performer plays a keyboard instrument such as, in particular, a keyboard and a piano.

Moreover, in the information processing device in the embodiments, the operation estimation unit performs control to output short-sound data prepared separately from performance sound data in synchronization with the timing of the performance operation for a performer having a performance operation speed of equal to or less than a specific speed threshold.

This can prevent the motion of an avatar of a performer from not synchronizing with a performance sound in a case where a performance operation is sporadically performed.

Moreover, the information processing device in the embodiments includes an elation degree estimation unit (elation degree estimation units F11 and F11B) and an effect control unit (effect adding unit F13). The elation degree estimation unit estimates the degree of elation of a performer based on sensing data from a sensor unit that senses the performer, or estimates the degree of elation of an audience based on sensing data from a sensor unit that senses the audience whose avatars are arranged in virtual space. The effect control unit performs control to present a predetermined staging effect to at least one of the performer and the audience in accordance with the elation degree estimated by the elation degree estimation unit.

This enables a visual staging effect to be added to the avatars of the performer and the audience having an enhanced elation degree, and enables a staging effect of vibrating terminals of the performer and the audience to be expressed when the performer and the audience have enhanced elation degrees.

Therefore, a feeling of elation of a certain person can be shared with other people, and a live feeling can be improved.

Furthermore, in the information processing device in the embodiments, the effect control unit changes the mode of the staging effect in accordance with the magnitude of the elation degree.

This enables the enhancement of the elation degree of a certain person to be shared with other people, and can further improve a live feeling.

Moreover, in the information processing device in the embodiments, the effect control unit synchronizes a staging effect with the rhythm of a reproduction sound of performance sound data.

This can enhance a staging influence caused by the effect.

Moreover, in the information processing device in the embodiments, the staging effect is based on visual information.

This enables a staging effect in accordance with an elation degree to be presented in such a manner that the staging effect does not become an auditory constraint on a reproduction sound of performance sound data.

Furthermore, in the information processing device in the embodiments, the effect control unit changes at least one of the number, color, and brightness of effect components in accordance with the magnitude of the elation degree.

When the staging effect is based on visual information, a change in elation degree can be appropriately expressed by changing the number, color, and brightness of the effect components as described above.

Moreover, in the information processing device in the embodiments, the elation degree estimation unit (elation degree estimation unit F11) estimates an elation degree based on motion capture data used for estimating a performance operation speed.

This eliminates the need for providing a sensor unit different from the motion capture unit for estimating an elation degree, and can simplify the configurations of devices prepared on the sides of the performer and the audience.

Moreover, in the information processing device in the embodiments, the elation degree estimation unit (elation degree estimation unit F11B) estimates an elation degree based on sensing data from an acceleration sensor or a biological information sensor. The acceleration sensor is provided in a terminal used by at least one of the performer and a member of the audience. The biological information sensor detects biological information on at least one of the performer and the member of the audience.

The above-described acceleration sensor can detect an action given to a terminal used, such as a member of the audience swinging and hitting his/her terminal used. The above-described biological information sensor can detect, for example, the heart rate and brain waves of a performer or a member of the audience.

Therefore, the degrees of elation of the performer and the audience can be appropriately estimated.

Furthermore, the information processing device in the embodiment is a terminal used by at least one of the performer and the member of the audience whose avatars are arranged in the virtual space.

That is, a configuration is adopted in which a performance operation speed is estimated and output sound control is performed in accordance with the performance operation speed not on the server side but on the local side.

This can reduce a processing load on the server side in obtaining an effect of the output sound control in the embodiments.

An information processing method in the embodiments includes: an information processing device estimating a performance operation speed for each of a plurality of performers whose avatars are arranged in common virtual space based on pieces of motion capture data on the performers; and selecting performance sound data in accordance with the performance operation speed, which has been estimated, among pieces of performance sound data prepared for each of performance operation speeds for each of the performers, and performing control to output selected pieces of performance sound data for each of the performers in synchronization with each other.

Functions and effects similar to those of the information processing device in the embodiments described above can be obtained by the information processing method as described above.

Furthermore, the program in the embodiments is allowed to be read by a computer device, and causes the computer device to implement functions of: estimating a performance operation speed for each of a plurality of performers whose avatars are arranged in common virtual space based on pieces of motion capture data on the performers; and selecting performance sound data in accordance with the performance operation speed, which has been estimated, among pieces of performance sound data prepared for each of performance operation speeds for each of the performers, and performing control to output selected pieces of performance sound data for each of the performers in synchronization with each other.

The information processing device in the embodiments described above can be achieved by the program as described above.

Note that the effects described in the present specification are merely examples and not limitations. Other effects may be exhibited.

### <6. Present Technology>

The present technology can also adopt the following configurations.
(1) An information processing device including:
   an operation estimation unit that estimates a performance operation speed for each of a plurality of performers whose own avatars are arranged in common virtual space based on motion capture data on the performers; and
   an output sound control unit that selects performance sound data corresponding to the performance operation speed estimated by the operation estimation unit among performance sound data prepared for each of performance operation speeds for each of the performers, and performs control to output selected performance sound data for each of the performers in synchronization.
(2) The information processing device according to (1),
   wherein the operation estimation unit estimates the performance operation speed based on motion of a skeleton model of a performer estimated based on motion capture data on the performer.
(3) The information processing device according to (2),
   wherein the operation estimation unit determines presence or absence of a performance operation of the performer based on the skeleton model, and estimates a frequency of the performance operation as the performance operation speed.
(4) The information processing device according to (3),
   wherein, for a finger using performer which is a performer of a finger performance instrument in which a performance operation is performed with a finger, the operation estimation unit determines a surface having a predetermined positional relation with a surface of a hand of the finger using performer as a virtual determination surface, and determines presence or absence of contact of the finger of the finger using performer to the virtual determination surface as the presence or absence of the performance operation.
(5) The information processing device according to (4),
   wherein the operation estimation unit determines a surface parallel to a surface of the hand and separated in a palm direction as the virtual determination surface.
(6) The information processing device according to any one of (3) to (5),
   wherein the operation estimation unit performs control to output short-sound data separately prepared from the performance sound data in synchronization with timing of the performance operation for the performer having a performance operation speed of equal to or less than a specific speed threshold.
(7) The information processing device according to any one of (1) to (6) including:
   an elation degree estimation unit that estimates a degree of elation of the performer based on sensing data from a sensor unit that senses the performer, or estimates a degree of elation of an audience based on sensing data from a sensor unit that senses the audience whose avatars are arranged in the virtual space; and
   an effect control unit that performs control to present a predetermined staging effect to at least any one of the performer and the audience in accordance with the elation degree estimated by the elation degree estimation unit.
(8) The information processing device according to (7),
   wherein the effect control unit changes a mode of the staging effect in accordance with the magnitude of the elation degree.
(9) The information processing device according to (7) or (8),
   wherein the effect control unit synchronizes the staging effect with a rhythm of a reproduction sound of the performance sound data.
(10) The information processing device according to any one of (7) to (9),
   wherein the staging effect is an effect based on visual information.
(11) The information processing device according to (10),
   wherein the effect control unit changes at least any one of a number, color, and brightness of effect components in accordance with magnitude of the elation degree.
(12) The information processing device according to any one of (7) to (11),
   wherein the elation degree estimation unit estimates the elation degree based on the motion capture data used for estimating the performance operation speed.
(13) The information processing device according to any one of (7) to (12),
   wherein the elation degree estimation unit estimates the elation degree based on sensing data from an acceleration sensor provided in a terminal used by at least any one of the performer and the audience or a biological information sensor that detects biological information on at least one of the performer and the audience.
(14) The information processing device according to any one of (1) to (13),
   wherein the information processing device is a terminal used by at least any one of the performer and an audience whose avatars are arranged in the virtual space.
(15) An information processing method including by an information processing device:
   estimating a performance operation speed for each of a plurality of performers whose own avatars are arranged in common virtual space based on motion capture data on the performers; and
   selecting performance sound data corresponding to the performance operation speed, which has been estimated, among performance sound data prepared for each of performance operation speeds for each of the performers, and performing control to output selected performance sound data for each of the performers in synchronization.
(16) A program capable of being read by a computer device, causing the computer device to implement functions of:
   estimating a performance operation speed for each of a plurality of performers whose own avatars are arranged in common virtual space based on motion capture data on the performers; and
   selecting performance sound data corresponding to the performance operation speed, which has been estimated, among performance sound data prepared for each of performance operation speeds for each of the performers, and performing control to output selected performance sound data for each of the performers in synchronization.

### Reference Signs List

Ap PERFORMER AVATAR
Ao AUDIENCE AVATAR
100 VR SYSTEM
1 PERFORMER TERMINAL
2 AUDIENCE TERMINAL
3, 3C SERVER DEVICE
NT NETWORK
11, 11A, 11B CPU
12 ROM
13 RAM
14 NONVOLATILE MEMORY UNIT
15 INPUT/OUTPUT INTERFACE
16 INPUT UNIT
17 DISPLAY UNIT
18 VOICE OUTPUT UNIT
19 STORAGE UNIT
20 COMMUNICATION UNIT
21 DRIVE
22 REMOVABLE RECORDING MEDIUM
23 MOTION CAPTURE UNIT
24 BUS
D1 SOUND DATA SET
D2 VR SPACE DATA
F1 SKELETON MODEL TRANSMISSION UNIT
F2, F2A IMAGE RENDERING UNIT
F3 PERFORMANCE OPERATION ANALYSIS UNIT
F4 OUTPUT SOUND CONTROL UNIT
Sp SURFACE
VD VIRTUAL DETERMINATION SURFACE
F11, F11B ELATION DEGREE ESTIMATION UNIT
F12 ELATION DEGREE TRANSMISSION UNIT
F13 EFFECT ADDING UNIT

## Claims

1. An information processing device including:
an operation estimation unit that estimates a performance operation speed for each of a plurality of performers whose own avatars are arranged in common virtual space based on motion capture data on the performers; and
an output sound control unit that selects performance sound data corresponding to the performance operation speed estimated by the operation estimation unit among performance sound data prepared for each of performance operation speeds for each of the performers, and performs control to output selected performance sound data for each of the performers in synchronization.

2. The information processing device according to claim 1,
wherein the operation estimation unit estimates the performance operation speed based on motion of a skeleton model of a performer estimated based on motion capture data on the performer.

3. The information processing device according to claim 2,
wherein the operation estimation unit determines presence or absence of a performance operation of the performer based on the skeleton model, and estimates a frequency of the performance operation as the performance operation speed.

4. The information processing device according to claim 3,
wherein, for a finger using performer which is a performer of a finger performance instrument in which a performance operation is performed with a finger, the operation estimation unit determines a surface having a predetermined positional relation with a surface of a hand of the finger using performer as a virtual determination surface, and determines presence or absence of contact of the finger of the finger using performer to the virtual determination surface as the presence or absence of the performance operation.

5. The information processing device according to claim 4,
wherein the operation estimation unit determines a surface parallel to a surface of the hand and separated in a palm direction as the virtual determination surface.

6. The information processing device according to claim 3,
wherein the operation estimation unit performs control to output short-sound data separately prepared from the performance sound data in synchronization with timing of the performance operation for the performer having a performance operation speed of equal to or less than a specific speed threshold.

7. The information processing device according to claim 1 including:
an elation degree estimation unit that estimates a degree of elation of the performer based on sensing data from a sensor unit that senses the performer, or estimates a degree of elation of an audience based on sensing data from a sensor unit that senses the audience whose avatars are arranged in the virtual space; and
an effect control unit that performs control to present a predetermined staging effect to at least any one of the performer and the audience in accordance with the elation degree estimated by the elation degree estimation unit.

8. The information processing device according to claim 7,
wherein the effect control unit changes a mode of the staging effect in accordance with the magnitude of the elation degree.

9. The information processing device according to claim 7,
wherein the effect control unit synchronizes the staging effect with a rhythm of a reproduction sound of the performance sound data.

10. The information processing device according to claim 7,
wherein the staging effect is an effect based on visual information.

11. The information processing device according to claim 10,
wherein the effect control unit changes at least any one of a number, color, and brightness of effect components in accordance with magnitude of the elation degree.

12. The information processing device according to claim 7,
wherein the elation degree estimation unit estimates the elation degree based on the motion capture data used for estimating the performance operation speed.

13. The information processing device according to claim 7,
wherein the elation degree estimation unit estimates the elation degree based on sensing data from an acceleration sensor provided in a terminal used by at least any one of the performer and the audience or a biological information sensor that detects biological information on at least one of the performer and the audience.

14. The information processing device according to claim 1,
wherein the information processing device is a terminal used by at least any one of the performer and an audience whose avatars are arranged in the virtual space.

15. An information processing method including
by an information processing device:
estimating a performance operation speed for each of a plurality of performers whose own avatars are arranged in common virtual space based on motion capture data on the performers; and
selecting performance sound data corresponding to the performance operation speed, which has been estimated, among performance sound data prepared for each of performance operation speeds for each of the performers, and performing control to output selected performance sound data for each of the performers in synchronization.

16. A program capable of being read by a computer device, causing the computer device to implement functions of:
estimating a performance operation speed for each of a plurality of performers whose own avatars are arranged in common virtual space based on motion capture data on the performers; and
selecting performance sound data corresponding to the performance operation speed, which has been estimated, among performance sound data prepared for each of performance operation speeds for each of the performers, and performing control to output selected performance sound data for each of the performers in synchronization.
